# EUROPÄISCHE PATENTANMELDUNG

(11) **EP 3 957 480 A1**
(43) Veröffentlichungstag der Anmeldung: **23.02.2022**
(21) Anmeldenummer: 20192099.8
(22) Anmeldetag: 21.08.2020
(51) Int. Cl.: B33Y 10/00, B29C 64/118, B29C 64/106, B29C 64/165, B29C 64/205, B29C 64/245, B33Y 70/10, B33Y 30/00

(54) **ANORDNUNG ZUR MATERIALEXTRUSION BEI EINER ADDITIVEN FERTIGUNG EINES DREIDIMENSIONALEN DRUCKOBJEKTS**

(71) Anmelder: Siemens Aktiengesellschaft, 80333 München (DE)
(72) Erfinder: Jähnicke, Jens, 09112 Chemnitz (DE); Sinn, Christof, 90571 Schwaig (DE)

(57) **Zusammenfassung**

Die Erfindung betrifft eine Anordnung (2) zur Materialextrusion bei einer additiven Fertigung eines dreidimensionalen Druckobjekts (42) mit einer Druckanordnung (4). Um eine höhere Festigkeit des Druckobjekts zu erreichen wird vorgeschlagen, dass die Druckanordnung (4) translatorisch in drei Achsen (X, Y, Z) verfahrbar ist und zumindest eine Düse (6) sowie zumindest eine Fördervorrichtung (8) umfasst, wobei die zumindest eine Düse (6) konfiguriert ist, ein Extrusionsmaterial (12) zu extrudieren, wobei die zumindest eine Fördervorrichtung (8) konfiguriert ist, insbesondere gleichzeitig, ein Füllmaterial (16) für das Extrusionsmaterial (12) zuzuführen.

## Beschreibung

Die Erfindung betrifft eine Anordnung zur Materialextrusion bei einer additiven Fertigung eines dreidimensionalen Druckobjekts mit einer Druckanordnung.

Ferner betrifft die Erfindung ein Verfahren zur Materialextrusion bei einer additiven Fertigung eines dreidimensionalen Druckobjekts mit einer Druckanordnung.

Darüber hinaus betrifft die Erfindung eine Steuereinheit mit Mitteln zur Durchführung eines derartigen Verfahrens.

Eine additive Fertigung derartiger dreidimensionaler Druckobjekte anhand von Formvorschriften, die in einem Computerprogramm oder in einer Datei gespeichert sind, erfolgt beispielsweise mittels Filament-3D-Druck. Gängige Verfahren sind beispielsweise "Fused Deposition Modeling" (FDM) oder "Fused Filament Fabrication" (FFF), bei welchen ein Werkstoff, insbesondere ein Kunststoff oder ein Harz geschmolzen, verdichtet, über zumindest eine Düse zu einem Filament geformt und anschließend abgekühlt wird. Insbesondere wird der geschmolzene Werkstoff entlang eines vorher festgelegten Pfades auf einem Untergrund aufgetragen. Der Untergrund ist entweder das unfertige Werkstück oder ein Stützelement, insbesondere eine Oberfläche, auf der das Werkstück entstehen soll.

Der Werkstoff wird in Form von Filament oder Granulat bereitgestellt, wobei der Werkstoff als Extrusionsmaterial bezeichnet wird. Als Extrusionsmaterial wird, neben dem genannten Kunststoff oder Harz, auch Metall, welches geschmolzen wird, verwendet. Optional enthält der, insbesondere thermoplastische, Kunststoff eine Füllung aus Metall- oder Keramikpartikeln, wobei die metall- oder keramikgefüllten Filamente nach dem Druckvorgang, beispielsweise durch einen Entbinderungs- und Sinterprozess, weiterverarbeitet werden.

Bei einem derartigen additiven Fertigungsverfahren ist eine Anbindung zwischen den additiv hergestellten Lagen schlechter als die Festigkeit innerhalb eine gedruckten Materialstranges, was zu einer geringeren Festigkeit des Bauteils führt.

Der Erfindung liegt demnach die Aufgabe zugrunde, eine Anordnung zur Materialextrusion bei einer additiven Fertigung eines dreidimensionalen Druckobjekts anzugeben, durch die eine höhere Festigkeit des Druckobjekts erreicht wird.

Die Aufgabe wird erfindungsgemäß durch eine Anordnung zur Materialextrusion bei einer additiven Fertigung eines dreidimensionalen Druckobjekts mit einer Druckanordnung gelöst, wobei die Druckanordnung translatorisch in drei Achsen verfahrbar ist und zumindest eine Düse sowie zumindest eine Fördervorrichtung umfasst, wobei die zumindest eine Düse konfiguriert ist, ein Extrusionsmaterial zu extrudieren, wobei die zumindest eine Fördervorrichtung konfiguriert ist, insbesondere gleichzeitig, ein Füllmaterial für das Extrusionsmaterial zuzuführen.

Ferner wird die Aufgabe erfindungsgemäß durch ein Verfahren zur Materialextrusion bei einer additiven Fertigung eines dreidimensionalen Druckobjekts mit einer Druckanordnung gelöst, wobei die Druckanordnung translatorisch in drei Achsen verfahrbar ist und zumindest eine Düse sowie zumindest eine Fördervorrichtung umfasst, wobei mit der zumindest einen Düse ein Extrusionsmaterial extrudiert wird, wobei mit der zumindest einen Fördervorrichtung, insbesondere gleichzeitig, ein Füllmaterial für das Extrusionsmaterial zugeführt wird.

Darüber hinaus wird die Aufgabe erfindungsgemäß durch eine Steuereinheit mit Mitteln zur Durchführung eines derartigen Verfahrens gelöst.

Die in Bezug auf die Anordnung nachstehend angeführten Vorteile und bevorzugten Ausgestaltungen lassen sich sinngemäß auf das Verfahren und die Steuereinheit übertragen.

Der Erfindung liegt die Überlegung zugrunde, die Festigkeit eines mittels Extrusion zu druckenden dreidimensionalen Druckobjekts durch, insbesondere gleichzeitiges, Zuführen eines Füllmaterials zu verbessern. Dazu wird eine translatorisch in drei Achsen verfahrbare Druckanordnung vorgeschlagen, welche zumindest eine Düse aufweist, die konfiguriert ist, ein Extrusionsmaterial zu extrudieren. Ferner weist die Druckanordnung eine, insbesondere separate, Fördervorrichtung zur Zuführung des Füllmaterials für das Extrusionsmaterial auf. Zum translatorischen Verfahren kommen insbesondere Stellglieder zum Einsatz, welche beispielsweise einen Elektromotor aufweisen und von einer Steuereinheit angesteuert werden.

Beispielsweise sind die Düse und die Fördervorrichtung in einem gemeinsamen Druckkopf aufgenommen. Beispielsweise weist die Düse zumindest im Bereich eines Auslasses einen punktsymmetrischen, insbesondere kreisförmigen, Querschnitt auf. Als Extrusionsmaterial kommen beispielsweise ein thermoplastischer Kunstsoff oder ein Harz, welche geschmolzen werden, zum Einsatz. Die Fördervorrichtung ist konfiguriert, insbesondere gleichzeitig, ein Füllmaterial für das Extrusionsmaterial zuzuführen. Insbesondere wird das Füllmaterial separat zugeführt. Eine separate Zuführung erfolgt lokal außerhalb der Düse für das Extrusionsmaterial. Als Füllmaterial werden beispielsweise Metallspäne, Keramikspäne, Kunststoffasern, Glasfasern und/oder Kohlefasern verwendet. Durch ein derartiges, insbesondere gleichzeitig zugeführtes, Füllmaterial wird eine höhere mechanischen Festigkeit des Druckobjekts erreicht.

Die Mittel zur Durchführung des Verfahrens der Steuereinheit umfassen beispielsweise einen digitalen Logikbaustein, insbesondere einen Mikroprozessor, einen Mikrocontroller, einen FPGA (field programmable gate array)oder einen ASIC (application-specific integrated circuit), der für den Betrieb der Anordnung zur Materialextrusion konfiguriert ist.

Eine weitere Ausführungsform sieht vor, dass die zumindest eine Fördervorrichtung konfiguriert ist, das Füllmaterial in das, insbesondere schmelzflüssige, Extrusionsmaterial zumindest teilweise einzudrücken. Dazu ist beispielsweise die Düse in Druckrichtung vorlaufend ausgeführt, während die Fördervorrichtung in Druckrichtung nachlaufend ausgeführt ist. Durch eine, beispielsweise periodische, Bewegung der Fördervorrichtung in Richtung des von der Düse extrudierten, insbesondere noch schmelzflüssigen, Filaments wird das Füllmaterial in das Extrusionsmaterial eingedrückt was zu einer verbesserten Verbindung des Füllmaterials mit dem Extrusionsmaterial und damit zu einer höheren mechanischen Festigkeit des Druckobjekts führt. Insbesondere werden die Zeitpunkte und Richtung der Bewegung der Fördervorrichtung von der Steuereinheit gesteuert.

Eine weitere Ausführungsform sieht vor, dass das Füllmaterial, insbesondere profilierte, Fasern aufweist. Derartige Fasern sind beispielsweise Kunststofffasern, Glasfasern und/oder Kohlefasern. Die Fasern sind beispielsweise tauförmig zu einem Faserbündel verdrillt, sodass das verdrillte Faserbündel eine profilierte Oberfläche ausbildet, welche, insbesondere im Vergleich zu einer glatten Oberfläche, eine mechanisch stabilere Verbindung mit dem Extrusionsmaterial erzeugt. Durch derartige Fasern wird eine verbesserte mechanische Festigkeit des Druckobjekts erreicht.

Eine weitere Ausführungsform sieht vor, dass die Fasern zu einem Gewebeband verarbeitet sind. Ein derartiges Gewebeband verstärkt das Druckobjekt nicht nur in Faserrichtung, sondern erhöht auch noch die Festigkeit zwischen den Lagen.

Eine weitere Ausführungsform sieht vor, dass die Fasern des Gewebebandes Verbindungsmittel zur Herstellung einer, insbesondere formschlüssigen, Verbindung zu einem benachbarten Gewebeband aufweisen. Die Verbindungsmittel sind beispielsweise als Faserüberstände ausgebildet, die eine Hakenform oder Pilzform aufweisen. Die formschlüssige Verbindung wird insbesondere durch Verhaken der hakenförmigen oder pilzförmigen Verbindungsmittel erreicht. Durch eine derartige Verbindung wird die mechanische Festigkeit des Druckobjekts, insbesondere zwischen den Lagen, erhöht.

Eine weitere Ausführungsform sieht vor, dass das Gewebeband im Bereich der Bandränder Einschnitte aufweist. Die Einschnitte sind beispielsweise periodisch beidseitig angeordnet und verlaufen insbesondere im Wesentlichen senkrecht zu einer äußeren Bandkontur. Derartige Einschnitte im Bereich der Bandränder erleichtern das Verlegen des Gewebebandes insbesondere auf einer gekrümmten Bahn.

Eine weitere Ausführungsform sieht vor, dass die Fördervorrichtung konfiguriert ist das Gewebeband zu schneiden und abschnittsweise zuzuführen. Beispielsweise umfasst die Fördervorrichtung eine scherenartige Schneidevorrichtung, die von der Steuereinheit angesteuert wird, um das Gewebeband abschnittsweise zuzuführen. Insbesondere sind durch eine abschnittsweise Zuführung des Gewebebandes gezielte Aussparungen möglich, um beispielsweise das Abtrennen an der Sollbruchstelle zu erleichtern.

Eine weitere Ausführungsform sieht vor, dass zumindest eine Fördervorrichtung im Verhältnis zu zumindest einer Düse derartig drehbar angeordnet ist, dass die Düse und die Fördervorrichtung auf einer zu druckenden gekrümmten Bahn jeweils zentriert angeordnet sind. Um gleichzeitig auf einer gekrümmten Bahn mit der Düse zu extrudieren und mit der Fördervorrichtung das Füllmaterial zuzuführen, wird mindestens eine Fördervorrichtung im Verhältnis zu zumindest einer Düse drehbar angeordnet. Während des Druckens auf der gekrümmten Bahn wird der Drehwinkel durch Drehen der Fördervorrichtung dynamisch justiert, sodass die Düse und die Fördervorrichtung stets auf der zu druckenden gekrümmten Bahn stets zentriert angeordnet sind. Die dynamische Justierung wird von der Steuereinheit gesteuert. Durch eine derartige Anordnung sind auch komplexe Druckobjekte schnell und kostengünstig realisierbar.

Eine weitere Ausführungsform sieht vor, dass ein Stützelement, auf welchem ein zu druckendes dreidimensionales Druckobjekt anordenbar ist, wobei das Stützelement zumindest rotatorisch um einen Azimutwinkel und/oder einen Elevationswinkel bewegbar ausgeführt ist. Das Stützelement ist ein, insbesondere im Wesentlichen ebenes, Element, beispielsweise eine Glasplatte, eine Polymerplatte oder eine Schaumstoffoberfläche, die das zu druckende dreidimensionale Druckobjekt während des Druckvorgangs stützt. Insbesondere ist das Stützelement ein Teil eines Drucktisches, welcher über zumindest ein Stellglied, welches insbesondere einen Elektromotor umfasst, rotatorisch beweglich ist. Das dreidimensionale Druckobjekt wird beispielsweise adhäsiv auf der Druckplatte während des Druckvorgangs gehalten. Durch ein derartiges rotatorisch bewegliches Stützelement wird das Drucken von Überhängen ohne zusätzliche Stützstrukturen ermöglicht. Zusammen mit einer translatorisch in drei Achsen verfahrbaren Druckanordnung spricht man von einem Fünf-Achsen-Druck. Durch die rotatorischen Freiheitsgrade in Azimutrichtung und Elevationsrichtung wird das Drucken von komplexen Objekten schnell und kostengünstig ermöglicht.

Im Folgenden wird die Erfindung anhand der in den Figuren dargestellten Ausführungsbeispiele näher beschrieben und erläutert.

Es zeigen:
- FIG 1: eine schematische Schnittdarstellung einer Anordnung zur Materialextrusion mit einer Druckanordnung,
- FIG 2: eine schematische Darstellung eines Extrusionsverfahrens,
- FIG 3: eine schematische Darstellung eines Extrusionsverfahrens beim Drucken einer gekrümmten Bahn,
- FIG 4: eine schematische Darstellung einer formschlüssigen Verbindung zwischen Gewebebändern und
- FIG 5: eine schematische Darstellung eines dreidimensionalen Druckobjekts mit einer Sollbruchstelle während eines Extrusionsverfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

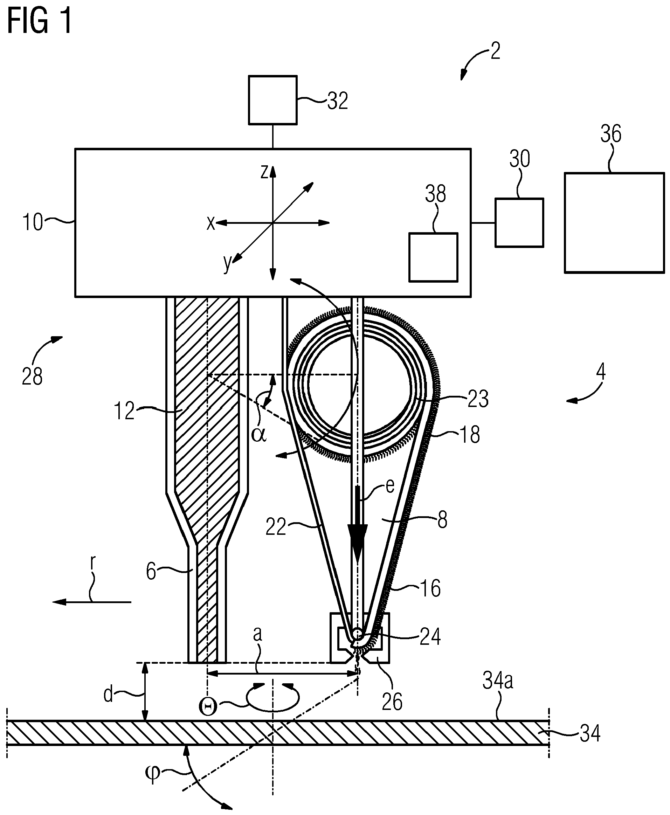

FIG 1 zeigt eine schematische Schnittdarstellung einer Anordnung 2 zur Materialextrusion mit einer Druckanordnung 4. Die Druckanordnung 4 umfasst eine Düse 6 sowie eine Fördervorrichtung 8, wobei die Düse 6 und die Fördervorrichtung 8 in einem Druckkopf 10 aufgenommen sind. Aus einem Reservoir wird der Düse 6 über eine, beispielsweise im Druckkopf angeordnete, Ventilanordnung zumindest ein Extrusionsmaterial 12 zur Verfügung gestellt. Als Extrusionsmaterial wird beispielsweise Kunststoff oder Harz verwendet. Optional enthält der, insbesondere thermoplastische, Kunststoff eine Füllung aus Metall- oder Keramikpartikeln, wobei metall- oder keramikgefüllte Filamente nach dem Druckvorgang, beispielsweise durch einen Entbinderungs- und Sinterprozess, weiterverarbeitet werden. Das Reservoir sowie die Ventilanordnung sind aus Gründen der Übersichtlichkeit in FIG 1 nicht dargestellt. Die Düse 6 ist so konfiguriert, das Extrusionsmaterial 12 durch einen Auslass 14 zu extrudieren. Die Druckanordnung 4 kann mehrere, insbesondere in einer Druckrichtung r hintereinander angeordnete, Düsen 6 aufweisen. Die Fördervorrichtung 8 ist konfiguriert, insbesondere gleichzeitig, ein Füllmaterial 16 für das Extrusionsmaterial 12 zuzuführen. Das Füllmaterial 16 weist Fasern 18, beispielsweise Glasfasern und/oder Kohlefasern, auf.

Insbesondere ist das Füllmaterial 16 als Gewebeband 20 aus Glasfasern und/oder Kohlefasern ausgeführt. Das Gewebeband 20 ist in der Fördervorrichtung 8 beispielhaft auf einer Trägerfolie 22 aufgebracht, wobei das auf der Trägerfolie 22 aufgebrachte Gewebeband 20 exemplarisch auf einer drehbar gelagerten Rolle 23 aufgewickelt ist. Während des Druckvorgangs wird das Gewebeband 20 durch Abrollen von der Rolle 23 zugeführt und im Bereich einer Umlenkrolle 24 von der Trägerfolie 22 getrennt. Das Gewebeband 20 kann, beispielsweise durch Bewegung der Fördervorrichtung 8 in eine Extrusionsrichtung e zumindest teilweise in das noch schmelzflüssige, Extrusionsmaterial 12 der Düse 6 eingedrückt werden. Insbesondere weist die Fördervorrichtung 8 eine Schneidevorrichtung 26 auf, die konfiguriert ist, das von der Trägerfolie 22 getrennte Gewebeband 20 zu schneiden. Insbesondere durch Schneiden ist das Gewebeband 20 abschnittsweise zuführbar.

Der Druckkopf 10 zusammen mit der Düse 6 und der Fördervorrichtung 8 wird als Extruder 28 bezeichnet und ist mit Hilfe von Stellgliedern 30, 32 translatorisch in drei Achsen X, Y, Z verfahrbar. Beispielsweise wird der Extruder 28 mittels eines X/Y-Stellgliedes 30, insbesondere gleichzeitig, entlang der X- und Y-Achse bewegt, während das Z-Stellglied 32 den Extruder 28 entlang der Z-Achse bewegt, um beispielsweise eine Distanz d der Düse 6 und/oder der Fördervorrichtung 8 von einem Untergrund zu regulieren. Der Untergrund ist entweder das teilweise fertig extrudierte dreidimensionale Druckobjekt oder ein Stützelement 34, welches eine Oberfläche 34a umfasst, auf dem das dreidimensionale Druckobjekt extrudiert werden kann. Das Stützelement 34, welches beispielsweise Teil eines Drucktisches ist, ist rotatorisch um einen Azimutwinkel θ und einen Elevationswinkel ϕ beweglich, um beispielsweise das Extrudieren von Überhängen ohne zusätzliche Stützstrukturen zu ermöglichen.

Eine Steuereinheit 36 ist operativ mit den Stellgliedern 30, 32 und mit dem Extruder 28 verbunden. Insbesondere wird ein Betrieb der Düse 6 und der Fördervorrichtung 8 durch die Steuereinheit 36 gesteuert. Die Steuereinheit 36 umfasst einen digitalen Logikbaustein, beispielswiese einen Mikroprozessor, einen Mikrocontroller, einen FPGA (field programmable gate array) oder einen ASIC (application-specific integrated circuit), der für den Betrieb der Anordnung 2 zur Materialextrusion konfiguriert ist.

Die Fördervorrichtung 8 ist im Verhältnis zur Düse 6 derartig um einen Drehwinkel α drehbar ausgeführt, dass die Düse 6 und die Fördervorrichtung 8 auf einer zu druckenden gekrümmten Bahn jeweils zentriert angeordnet sind. Insbesondere bleibt der Betrag des Abstands a unabhängig vom Drehwinkel α konstant. Ein weiteres Stellglied 38, welches im Druckkopf 10 angeordnet ist und beispielsweise einen Elektromotor umfasst, wird von der Steuereinheit 36 angesteuert, um den Drehwinkel α während des Extrusionsvorgangs dynamisch so zu justieren, dass die Düse 6 und die Fördervorrichtung 8 auf der zu druckenden gekrümmten Bahn jeweils stets zentriert angeordnet sind.

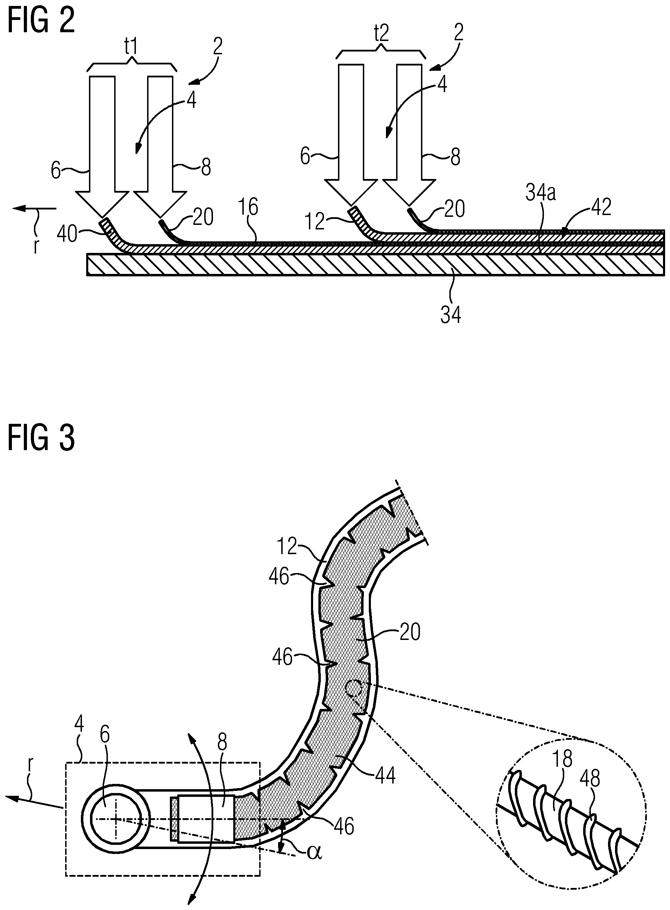

FIG 2 zeigt eine schematische Darstellung eines Extrusionsverfahrens, wobei der Extrusionsvorgang zu verschiedenen Zeitpunkten t1, t2 dargestellt ist. Die Düse 6 ist in Druckrichtung r vorlaufend ausgeführt, während die Fördervorrichtung 8 in Druckrichtung r nachlaufend ausgeführt ist. Die Düse 6 und die Fördervorrichtung 8 der Druckanordnung 4 arbeiten gleichzeitig, wobei die Düse 6 ein Filament 40 aus einem Extrusionsmaterial 12 extrudiert, während die Fördervorrichtung 8 zeitgleich ein Füllmaterial 16, das als Gewebeband 20 ausgeführt ist, zuführt. Insbesondere drückt die Fördervorrichtung 8 das Füllmaterial 16 in das, insbesondere noch schmelzflüssige, Filament 40 zumindest teilweise ein. Auf diese Weise wird ein dreidimensionales Druckobjekt 42 aus einer Mehrzahl von übereinander angeordneten Filamenten 40 und Gewebebändern 20 aufgebaut. Die eingelegten Gewebebänder 20 verstärken das dreidimensionale Druckobjekt 42 nicht nur in Faserrichtung, sondern erhöhen auch die Festigkeit zwischen den Lagen.

Um die Ablage des Gewebeband 20 planen zu können, wird die dafür benötigte Funktionalität im CAM-System (Computer Aided Manufacturing System) bereitgestellt. Dabei sind beispielsweise Bänder mit unterschiedlichen Bandstärken und/oder Materialeigenschaften wie Elastizität, Härte, etc. auswählbar. Ferner ist im CAM-System eine Ablagestrategie für das Gewebeband 20 festlegbar. Durch eine derartige Ablagestrategie wird beispielsweise festgelegt, an welchen Stellen ein Gewebeband 20 zugeführt wird. Die weitere Ausführung der Anordnung 2 zur Materialextrusion in FIG 2 entspricht der Ausführung in FIG 1.

FIG 3 zeigt eine schematische Darstellung eines Extrusionsverfahrens beim Drucken einer gekrümmten Bahn 44. Die Düse 6 der Druckanordnung 4 ist in Druckrichtung r vorlaufend ausgeführt, während die Fördervorrichtung 8 in Druckrichtung r nachlaufend ausgeführt ist. Die Fördervorrichtung 8 ist im Verhältnis zur Düse 6 derartig um einen Drehwinkel α drehbar ausgeführt, dass die Düse 6 und die Fördervorrichtung 8 auf der zu druckenden gekrümmten Bahn 44 stets zentriert angeordnet sind. Das Gewebeband 20 weist im Bereich der Bandränder Einschnitte 46 auf, um das Verlegen des Gewebebandes 20 auf der gekrümmten Bahn 44 zu erleichtern. Ferner können die Fasern 18 eine Profilierung 48, welche beispielsweise Erhöhungen und/oder Vertiefungen umfasst, zur Verbesserung der Verbindung mit dem Extrusionsmaterial 12 aufweisen. Die weitere Ausführung des Extrusionsverfahrens in FIG 3 entspricht der Ausführung in FIG 2.

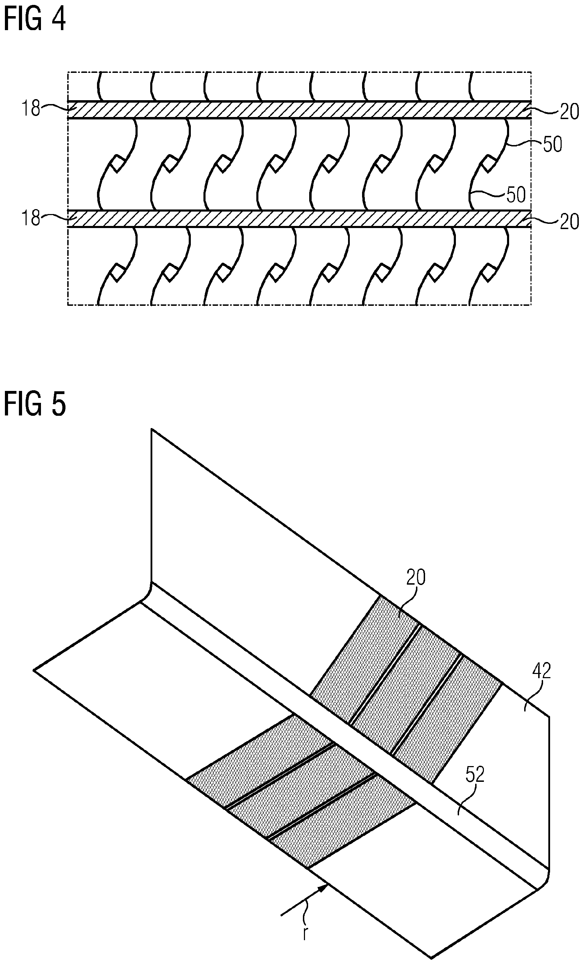

FIG 4 zeigt eine schematische Darstellung einer formschlüssigen Verbindung zwischen Gewebebändern 20. Die Fasern 18 der Gewebebänder 20 umfassen Verbindungsmittel 50 zur Herstellung der formschlüssigen Verbindung zu benachbarten Gewebebändern 20. Die Verbindungsmittel 50 sind beispielsweise als Faserüberstände ausgebildet, die eine Hakenform oder Pilzform aufweisen. Die formschlüssige Verbindung wird insbesondere durch Verhaken der hakenförmigen oder pilzförmigen Verbindungsmittel erreicht.

FIG 5 zeigt eine schematische Darstellung eines dreidimensionalen Druckobjekts 42 mit einer Sollbruchstelle 52 während eines Extrusionsverfahrens. Das Gewebeband 20 wird im Bereich der Sollbruchstelle 52 ausgespart, um das Abtrennen an der Sollbruchstelle 52 zu erleichtern. Die weitere Ausführung des Extrusionsverfahrens in FIG 5 entspricht der Ausführung in FIG 3.

Zusammenfassend betrifft die Erfindung eine Anordnung 2 zur Materialextrusion bei einer additiven Fertigung eines dreidimensionalen Druckobjekts 42 mit einer Druckanordnung 4. Um eine höhere Festigkeit des Druckobjekts zu erreichen wird vorgeschlagen, dass die Druckanordnung 4 translatorisch in drei Achsen X, Y, Z verfahrbar ist und zumindest eine Düse 6 sowie zumindest eine Fördervorrichtung 8 umfasst, wobei die zumindest eine Düse 6 konfiguriert ist, ein Extrusionsmaterial 12 zu extrudieren, wobei die zumindest eine Fördervorrichtung 8 konfiguriert ist, insbesondere gleichzeitig, ein Füllmaterial 16 für das Extrusionsmaterial 12 zuzuführen.

## Patentansprüche

1. Anordnung (2) zur Materialextrusion bei einer additiven Fertigung eines dreidimensionalen Druckobjekts (42) mit einer Druckanordnung (4),
wobei die Druckanordnung (4) translatorisch in drei Achsen (X, Y, Z) verfahrbar ist und zumindest eine Düse (6) sowie zumindest eine Fördervorrichtung (8) umfasst,
wobei die zumindest eine Düse (6) konfiguriert ist, ein Extrusionsmaterial (12) zu extrudieren,
wobei die zumindest eine Fördervorrichtung (8) konfiguriert ist, insbesondere gleichzeitig, ein Füllmaterial (16) für das Extrusionsmaterial (12) zuzuführen.

2. Anordnung (2) nach Anspruch 1,
wobei die zumindest eine Fördervorrichtung (8) konfiguriert ist, das Füllmaterial (16) in das, insbesondere schmelzflüssige, Extrusionsmaterial (12) zumindest teilweise einzudrücken.

3. Anordnung (2) nach einem der Ansprüche 1 oder 2,
wobei das Füllmaterial (16), insbesondere profilierte, Fasern (18) aufweist.

4. Anordnung (2) nach Anspruch 3,
wobei die Fasern (18) zu einem Gewebeband (20) verarbeitet sind.

5. Anordnung (2) nach Anspruch 4,
wobei die Fasern (18) des Gewebebandes (20) Verbindungsmittel (50) zur Herstellung einer, insbesondere formschlüssigen, Verbindung zu einem benachbarten Gewebeband (20) aufweisen.

6. Anordnung (2) nach einem der Ansprüche 4 oder 5,
wobei das Gewebeband (20) im Bereich der Bandränder Einschnitte (46) aufweist.

7. Anordnung (2) nach einem der Ansprüche 4 bis 6,
wobei die Fördervorrichtung (8) konfiguriert ist das Gewebeband (20) zu schneiden und abschnittsweise zuzuführen.

8. Anordnung (2) nach einem der vorherigen Ansprüche,
wobei zumindest eine Fördervorrichtung (8) im Verhältnis zu zumindest einer Düse (6) derartig drehbar angeordnet ist, dass die Düse (6) und die Fördervorrichtung (8) auf einer zu druckenden gekrümmten Bahn (44) jeweils zentriert angeordnet sind.

9. Anordnung (2) nach einem der vorherigen Ansprüche, aufweisend ein Stützelement (34), auf welchem ein zu druckendes dreidimensionales Druckobjekt (42) anordenbar ist,
wobei das Stützelement (34) zumindest rotatorisch um einen Azimutwinkel (θ) und/oder einen Elevationswinkel (ϕ) bewegbar ausgeführt ist.

10. Verfahren zur Materialextrusion bei einer additiven Fertigung eines dreidimensionalen Druckobjekts (42) mit einer Druckanordnung (4),
wobei die Druckanordnung (4) translatorisch in drei Achsen (X, Y, Z) verfahrbar ist und zumindest eine Düse (6) sowie zumindest eine Fördervorrichtung (8) umfasst,
wobei mit der zumindest einen Düse (6) ein Extrusionsmaterial (12) extrudiert wird,
wobei mit der zumindest einen Fördervorrichtung (8), insbesondere gleichzeitig, ein Füllmaterial (16) für das Extrusionsmaterial (12) zugeführt wird.

11. Verfahren nach Anspruch 10,
wobei das Füllmaterial (16) durch die zumindest eine Fördervorrichtung (8) in das, insbesondere schmelzflüssige, Extrusionsmaterial (12) zumindest teilweise eingedrückt wird.

12. Verfahren nach einem der Ansprüche 10 oder 11,
wobei das Füllmaterial (16) zu einem Gewebeband (20) verarbeitete Fasern (18) aufweist,
wobei die Fasern (18) des Gewebebandes (20) Verbindungsmittel (50) aufweisen und
wobei durch die Verbindungsmittel (50) eine, insbesondere formschlüssige, Verbindung zu einem benachbarten Gewebeband (20) hergestellt wird.

13. Verfahren nach einem der Ansprüche 10 bis 12,
wobei das Füllmaterial (16) zu einem Gewebeband (20) verarbeitete Fasern (18) aufweist und
wobei das Gewebeband (20), insbesondere durch Schneiden, abschnittsweise zugeführt wird.

14. Verfahren nach einem der Ansprüche 10 bis 13,
wobei zumindest eine Fördervorrichtung (8) im Verhältnis zu zumindest einer Düse (6) derartig gedreht wird, dass die Düse (6) und die Fördervorrichtung (8) auf einer zu druckenden gekrümmten Bahn (44) jeweils zentriert angeordnet werden.

15. Verfahren nach einem der Ansprüche 10 bis 14,
wobei das zu druckende dreidimensionale Druckobjekt (42) auf einem Stützelement (34) angeordnet wird,
wobei das Stützelement (34) zumindest rotatorisch um einen Azimutwinkel θ und einen Elevationswinkel ϕ bewegt wird.

16. Steuereinheit (36) mit Mitteln zur Durchführung eines Verfahrens nach einem der Ansprüche 10 bis 15.
